# EUROPEAN PATENT SPECIFICATION

(11) **EP 4 666 681 B1**
(45) Date of publication and mention of the grant of the patent: **21.10.2026**
(21) Application number: 24706054.4
(22) Date of filing: 16.02.2024
(51) Int. Cl.: H04W 36/00, H04W 8/24

(54) **LTM REPORTING**
LTM-MELDUNG
RAPPORT LTM

(30) Priority: 16.02.2023 US 202363485329 P
(43) Date of publication of application: 24.12.2025
(73) Proprietor: Telefonaktiebolaget LM Ericsson (publ), 164 83 Stockholm (SE)
(72) Inventor: TIDESTAV, Claes, 746 31 Bålsta (SE); WALLENTIN, Pontus, 582 39 Linköping (SE); DA SILVA, Icaro Leonardo, 170 77 Solna (SE); ORSINO, Antonino, 02480 Kirkkonummi (FI)
(74) Representative: Ericsson
(86) International application number: PCT/EP2024/053965
(87) International publication number: WO 2024/170731

(56) References cited:
- MENGJIE ZHANG ET AL: "Discussion on candidate cell configuration and maintenance", vol. 3GPP RAN 2, no. Toulouse, FR; 20221114 - 20221118, 4 November 2022 (2022-11-04), XP052215898, Retrieved from the Internet <URL:https://www.3gpp.org/ftp/TSG_RAN/WG2_RL2/TSGR2_120/Docs/R2-2211794.zip R2-2211794 Discussion on candidate cell configuration and maintenance.docx> [retrieved on 20221104]
- YULONG SHI ET AL: "Solutions to cell switch in LTM", vol. 3GPP RAN 2, no. Toulouse, FR; 20221114 - 20221118, 4 November 2022 (2022-11-04), XP052215746, Retrieved from the Internet <URL:https://www.3gpp.org/ftp/TSG_RAN/WG2_RL2/TSGR2_120/Docs/R2-2211642.zip R2-2211642 Solutions to cell switch in LTM.docx> [retrieved on 20221104]
- SHINYA KUMAGAI ET AL: "Discussion on L1 enhancements for inter-cell mobility", vol. 3GPP RAN 1, no. Toulouse, FR; 20221114 - 20221118, 7 November 2022 (2022-11-07), XP052222568, Retrieved from the Internet <URL:https://www.3gpp.org/ftp/TSG_RAN/WG1_RL1/TSGR1_111/Docs/R1-2212004.zip R1-2212004.docx> [retrieved on 20221107]
- NAVEEN PALLE ET AL: "Dissecting the UE processing for RRC LTM config", vol. 3GPP RAN 2, no. Toulouse, FR; 20221114 - 20221118, 4 November 2022 (2022-11-04), XP052215815, Retrieved from the Internet <URL:https://www.3gpp.org/ftp/TSG_RAN/WG2_RL2/TSGR2_120/Docs/R2-2211711.zip R2-2211711_ltm_proc.docx> [retrieved on 20221104]
- JANI-PEKKA KAINULAINEN ET AL: "LTM general aspects and scenarios", vol. 3GPP RAN 4, no. Toulouse, FR; 20221114 - 20221118, 7 November 2022 (2022-11-07), XP052213360, Retrieved from the Internet <URL:https://www.3gpp.org/ftp/TSG_RAN/WG4_Radio/TSGR4_105/Docs/R4-2219443.zip R4-2219443.docx> [retrieved on 20221107]

## Description

### TECHNICAL FIELD

The present disclosure relates to wireless communications, and in particular, to configurations for Open Systems Interconnection (OSI) Layer 1/Layer 2 (L1/L2) triggered mobility (LTM) measurement reporting.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs. The 3GPP is also developing standards for Sixth Generation (6G) wireless communication networks.

In 3GPP Release 18 (3GPP Rel-18), the 3GPP has agreed on a Work Item (WI) on Further New Radio (NR) mobility enhancements, in particular, in a technical area entitled Layer 1/Layer 2 (L1/L2) based inter-cell mobility. See the WI description (e.g., WID in RP-213565). According to the WID, when the wireless device (WD) (e.g., a UE) moves from the coverage area of one cell to another cell, at some point a serving cell change needs to be performed. In some existing systems, a serving cell change may be triggered by OSI Layer 3 (L3) measurements and may be performed by RRC signalling triggered Reconfiguration with Synchronization for change of Primary cell (PCell) and Primary and secondary cells (PSCell), as well as release add for secondary cells (SCells) when applicable. These cases involve complete L2 (and L1) resets, leading to longer latency, larger overhead, and longer interruption time than beam switch mobility. The goal of L1/L2 mobility enhancements is to enable a serving cell change via L1/L2 signalling, in order to reduce the latency, overhead and interruption time.

L1-L2 inter-cell mobility should be, if possible, similar to an inter-cell beam management, i.e., to support L1-L2 inter-cell mobility, the WD may be configured to perform measurements on cells which are not the serving cells as defined up to 3GPP Rel-17. In 3GPP Rel-17, to support inter-physical cell identity (PCI) multi-transmission and reception point (mTRP) operation, a solution has been standardized where a channel state information (CSI) resource may be associated to a PCI which is not the same PCI of one of the serving cells. That solution also requires the WD to receive an explicit indication of which beams (synchronization signal block (SSBs)) and PCIs to be measured for a given reporting configuration.

A goal of current standardization efforts is to specify mechanisms and procedures of L1/L2 based inter-cell mobility for mobility latency reduction, including, e.g.,:
- Configuration and maintenance for multiple candidate cells to allow fast application of configurations for candidate cells;
- Dynamic switch mechanism among candidate serving cells (including SpCell and SCell) for the potential applicable scenarios based on L1/L2 signalling;
- L1 enhancements for inter-cell beam management, including L1 measurement and reporting, and beam indication:
   ∘ Note 1: Early involvement is desired, including the possibility of further clarifying the interaction between this bullet with the previous bullet;
- Timing Advance management;
- Central unit-distributed unit (CU-DU) interface signaling to support L1/L2 mobility, if needed.

Note 2: FR2 specific enhancements are not precluded, if any.

Note 3: The procedure of L1/L2 based inter-cell mobility are applicable to the following scenarios:
- Standalone, carrier aggregation (CA) and NR-dual connectivity (DC) case with serving cell change within one carrier group (CG);
- Intra-DU case and intra-CU inter-DU case (applicable for Standalone and CA: no new RAN interfaces are expected);
- Both intra-frequency and inter-frequency;
- Both FR1 and FR2; and
- Source and target cells may be synchronized or non-synchronized.

### CSI reporting

In NR, the WD measures, and reports Channel State Information (CSI) to the network (NW). The NW uses the CSI reports to perform, e.g., link adaptation and beam selection. These measurement reports are examples of Uplink Control Information (UCI). UCI is carried in the Physical Uplink Control Channel (PUCCH) or Physical Uplink Shared Channel (PUSCH).

The WD is configured with a number of CSI report configurations, e.g., in a radio resource control (RRC) information element (IE) CSI-ReportConfig. The CSI report configuration describes how the WD shall generate a certain CSI report. It is linked to one or more CSI resource configurations which describe how the WD should make measurements for the report.

Among other things, the CSI report configuration describes what quantity the WD shall include in the CSI report. The different CSI report quantities from the WD to the network are the following:
- CRI (CSI-RS resource indicator). In case the configured measurement contains a set of CSI-RS resources, then the CRI is used to select a preferred CSI-RS resource for channel measurement;
- RI (rank indicator) represents the recommended number of physical downlink shared channel (PDSCH) layers, calculated assuming the selected CRI;
- PMI (precoding matrix information) is used to indicate the recommended precoding matrix;
- CQI (channel quality information) is a 4-bit value indicating the recommended modulation scheme and code rate, assuming the selected PMI, RI, and CRI;
- SSBRI (SSB indicator) is like CRI but indicates instead which SSB the accompanying CSI report is valid for. This is a wideband quantity and a report for beam management can contain up to four SSBRIs.
- LI (layer indicator) in case of RI>1, indicates the strongest layer, that is, column, of the selected precoding matrix, assuming the selected CQI, PMI, RI, and CRI.
- L1-reference signal received power (RSRP) carries a single or multiple RSRP measurements. For the case of a single L1-RSRP, a 7-bit value is used using the range [-140, -44] dBm with 1 dB step size.

CRI, RI, SSBRI, L1-RSRP, and LI are wideband quantities, meaning that one value is reported for the entire bandwidth of the reference signal. PMI and CQI can be reported per subband: the bandwidth of the reference signal is split into multiple nonoverlapping subbands, and one value is reported for each subband.

The measurement reference signal (RS) may be, e.g., CSI-RS, SSB, etc.

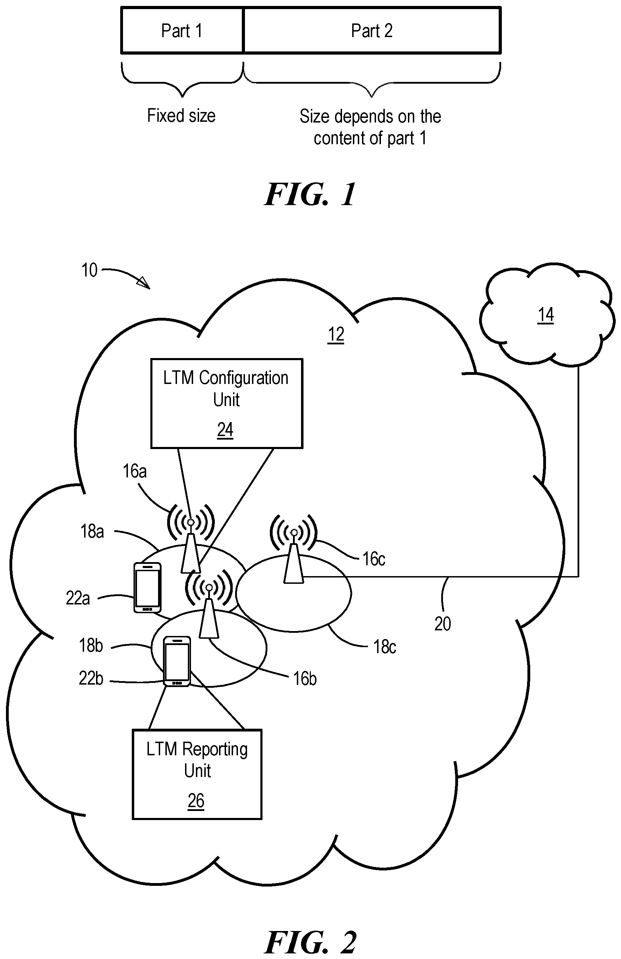

In some cases, a CSI report includes two parts. FIG. 1 is a diagram illustrating an example CSI report split in two parts, where the size of the second part depends on the content of the first part. Part 1 has a fixed payload size and is used to identify the number of information bits in Part 2. For example, the RI and one CQI value can be included in Part 1. If RI>4, a second CQI value is includes in Part 2. This reduces the size of the CSI report.

Thus, existing systems lack one or more configurations for supporting LTM measurement reporting.

3GPP draft R2-2211794, entitled "Discussion on candidate cell configuration and maintenance", 3GPP TSG-RAN WG2 Meeting #120, Nov 14th - 18th, 2022, discusses candidate cell configuration.

3GPP draft R2-2211642, entitled "Solution to cell switch in LTM", 3GPP TSG-RAN WG2 Meeting #120, Toulouse, France, 14 - 18 November 2022, discusses solutions to cell switch in L1/L2-triggered mobility (LTM).

3GPP draft R2-2212004, entitled "NR IDC TDM solutions and indications", 3GPP TSG-RAN WG2 Meeting #120, Toulouse, France, 2022-11-15 - 2022-11-18 discuses TDM solutions.

### SUMMARY

Many details for L1/L2-Triggered Mobility (LTM) are yet to be specified in 3GPP. This includes the details of the procedures and messages for lower-layer measurement reporting and LTM cell switch. One problem that remains to be solved is when the WD transmits a lower-layer (L1) measurement report that includes measurements on LTM candidate cell(s) to the network (e.g., to a network node, such as gNB), existing systems may lack a configuration for the network node, based on the content of the received measurement report, to determine which LTM candidate cell to potentially trigger a subsequent LTM cell switch. More specifically, in a RAN distributed architecture with a central unit (CU) and distributed units (Dus), the serving DU that receives the measurement report may not control the LTM candidate cell for a given measurement included in the report concerns, as the LTM candidate cell may be controlled by a different network node (such as by a different DU). Further, in existing systems, if the received measurement in the report indicates a certain beam the WD has measured on, the serving DU may not be aware of the beam configuration of the LTM candidate cell, when it is controlled by a different network node (such as by a different DU).

The invention is defined by the subject-matter of the independent claims. Preferred embodiments are set out in the dependent claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a diagram illustrating an example CSI reporting format;
FIG. 2 is a schematic diagram of an example network architecture illustrating a communication system according to principles disclosed herein;
FIG. 3 is a block diagram of a network node in communication with a wireless device over a wireless connection according to some embodiments of the present disclosure;
FIG. 4 is a flowchart of an example process in a network node for LTM reporting according to some embodiments of the present disclosure;
FIG. 5 is a flowchart of an example process in a wireless device for LTM reporting according to some embodiments of the present disclosure;
FIG. 6 is a flowchart of another example process in a network node for LTM reporting according to some embodiments of the present disclosure;
FIG. 7 is a flowchart of another example process in a wireless device for LTM reporting according to some embodiments of the present disclosure;
FIG. 8 is a signaling diagram of an example process in a communication system including a network node and a wireless device, according to some embodiments of the present disclosure; and
FIG. 9 is flowchart of another example process in a communication system including a network node and a wireless device, according to some embodiments of the present disclosure.

### DETAILED DESCRIPTION

Before describing in detail exemplary embodiments, it is noted that the embodiments reside primarily in combinations of apparatus components and processing steps related to configurations for LTM reporting. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multistandard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3^{rd} party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments are directed to configurations for LTM reporting.

Referring again to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

A network node 16 (eNB or gNB) is configured to include an LTM configuration unit 24 which is configured to supporting LTM configurations, e.g., for a wireless device 22. A wireless device 22 is configured to include an LTM reporting unit 26 which is configured to supporting LTM configurations, e.g., for reporting measurements to one or more network node 16.

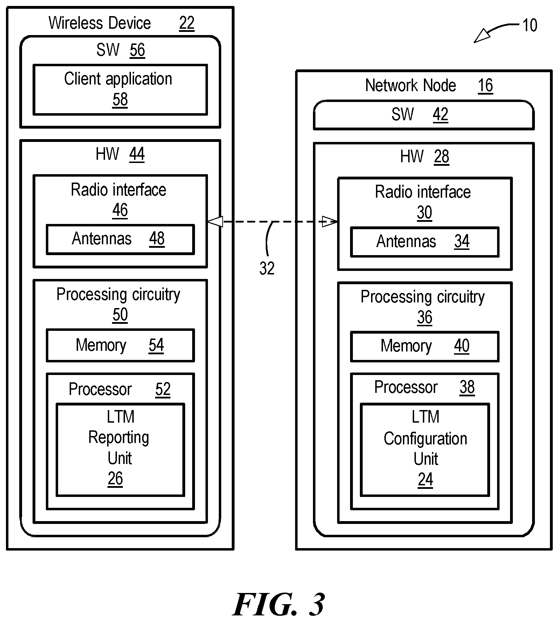

Example implementations, in accordance with an embodiment, of the WD 22 and network node 16 discussed in the preceding paragraphs will now be described with reference to FIG. 3.

The communication system 10 includes a network node 16 provided in a communication system 10 and including hardware 28 enabling it to communicate with the WD 22. The hardware 28 may include a radio interface 30 for setting up and maintaining at least a wireless connection 32 with a WD 22 located in a coverage area 18 served by the network node 16. The radio interface 30 may be formed as or may include, for example, one or more RF transmitters, one or more RF receivers, and/or one or more RF transceivers. The radio interface 30 includes an array of antennas 34 to radiate and receive signal(s) carrying electromagnetic waves.

In the embodiment shown, the hardware 28 of the network node 16 further includes processing circuitry 36. The processing circuitry 36 may include a processor 38 and a memory 40. In particular, in addition to or instead of a processor, such as a central processing unit, and memory, the processing circuitry 36 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 38 may be configured to access (e.g., write to and/or read from) the memory 40, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 42 stored internally in, for example, memory 40, or stored in external memory (e.g., database, storage array, network storage device, etc.) accessible by the network node 16 via an external connection. The software 42 may be executable by the processing circuitry 36. The processing circuitry 36 may be configured to control any of the methods and/or processes described herein and/or to cause such methods, and/or processes to be performed, e.g., by network node 16. Processor 38 corresponds to one or more processors 38 for performing network node 16 functions described herein. The memory 40 is configured to store data, programmatic software code and/or other information described herein. In some embodiments, the software 42 may include instructions that, when executed by the processor 38 and/or processing circuitry 36, causes the processor 38 and/or processing circuitry 36 to perform the processes described herein with respect to network node 16. For example, processing circuitry 36 of the network node 16 may include LTM configuration unit 24 which is configured for supporting LTM configurations.

The communication system 10 further includes the WD 22 already referred to. The WD 22 may have hardware 44 that may include a radio interface 46 configured to set up and maintain a wireless connection 32 with a network node 16 serving a coverage area 18 in which the WD 22 is currently located. The radio interface 46 may be formed as or may include, for example, one or more RF transmitters, one or more RF receivers, and/or one or more RF transceivers. The radio interface 46 includes an array of antennas 48 to radiate and receive signal(s) carrying electromagnetic waves.

The hardware 44 of the WD 22 further includes processing circuitry 50. The processing circuitry 50 may include a processor 52 and memory 54. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) memory 54, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 56, which is stored in, for example, memory 54 at the WD 22, or stored in external memory (e.g., database, storage array, network storage device, etc.) accessible by the WD 22. The software 56 may be executable by the processing circuitry 50. The software 56 may include a client application 58. The client application 58 may be operable to provide a service to a human or non-human user via the WD 22.

The processing circuitry 50 may be configured to control any of the methods and/or processes described herein and/or to cause such methods, and/or processes to be performed, e.g., by WD 22. The processor 52 corresponds to one or more processors 52 for performing WD 22 functions described herein. The WD 22 includes memory 54 that is configured to store data, programmatic software code and/or other information described herein. In some embodiments, the software 56 and/or the client application 58 may include instructions that, when executed by the processor 52 and/or processing circuitry 50, causes the processor 52 and/or processing circuitry 50 to perform the processes described herein with respect to WD 22. For example, the processing circuitry 50 of the wireless device 22 may include LTM reporting unit 26 which is configured to support LTM reporting, such as by determining and providing LTM report information for delivery to a network node 16.

In some embodiments, the inner workings of the network node 16 and WD 22 may be as shown in FIG. 3 and independently, the surrounding network topology may be that of FIG. 2.

The wireless connection 32 between the WD 22 and the network node 16 is in accordance with the teachings of the embodiments described throughout this disclosure. More precisely, the teachings of some of these embodiments may improve the data rate, latency, and/or power consumption and thereby provide benefits such as reduced user waiting time, relaxed restriction on file size, better responsiveness, extended battery lifetime, etc. In some embodiments, a measurement procedure may be provided for the purpose of monitoring data rate, latency and other factors on which the one or more embodiments improve.

Although FIGS. 2 and 3 show various "units" such as LTM configuration unit 24 and LTM reporting unit 26 as being within a respective processor, it is contemplated that these units may be implemented such that a portion of the unit is stored in a corresponding memory within the processing circuitry. In other words, the units may be implemented in hardware or in a combination of hardware and software within the processing circuitry.

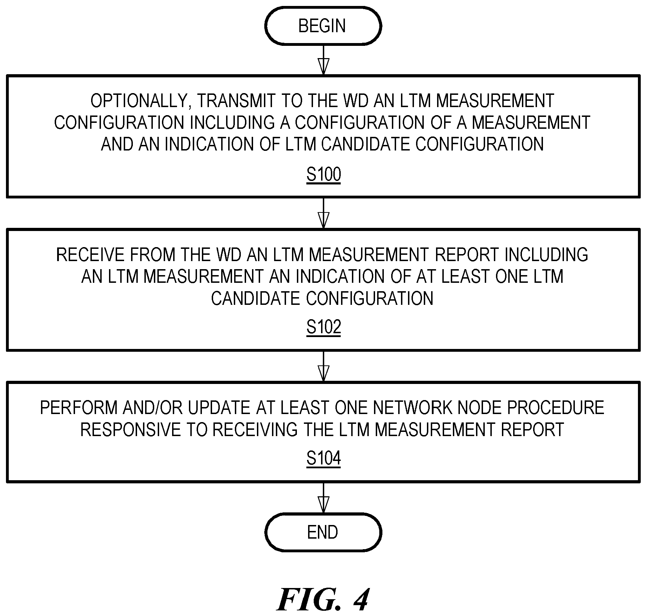

FIG. 4 is a flowchart of an example process in a network node 16 for supporting configurations for LTM reporting. One or more blocks described herein may be performed by one or more elements of network node 16 such as by one or more of processing circuitry 36 (including the LTM configuration unit 24), processor 38, and/or radio interface 30. Network node 16 is configured to optionally, transmit (Block S100) to the WD 22 an LTM measurement configuration including a configuration of a measurement and an indication of LTM candidate configuration. Network node 16 is configured to receive (Block S102) from the WD 22, an LTM measurement report including an LTM measurement an indication of at least one LTM candidate configuration. Network node 16 is configured to perform and/or update (Block S104) at least one network node procedure responsive to receiving the LTM measurement report.

In some embodiments, the LTM candidate configuration includes at least one of an LTM candidate configuration index and an LTM measurement index. In some embodiments, the at least one network node procedure includes selecting an LTM candidate cell configuration to use for an LTM cell switch procedure triggered by the received LTM measurement report.

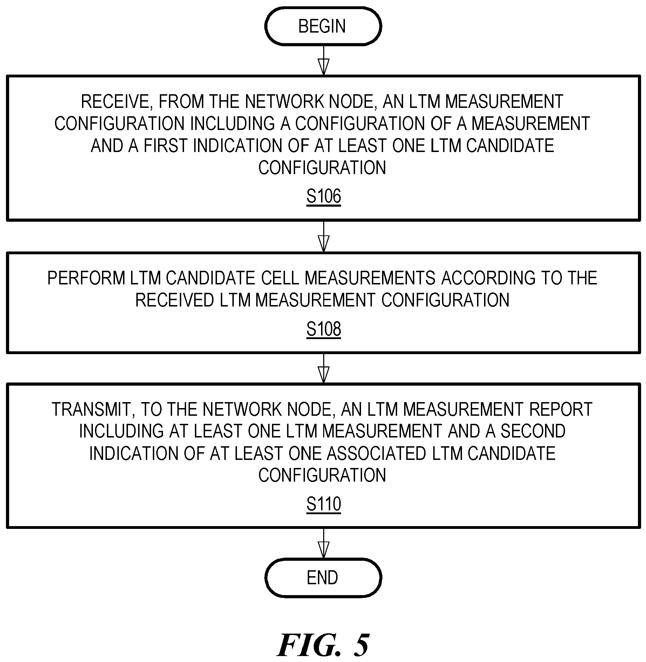

FIG. 5 is a flowchart of an example process in a wireless device 22 according to some embodiments of the present disclosure. One or more blocks described herein may be performed by one or more elements of wireless device 22 such as by one or more of processing circuitry 50 (including the LTM reporting unit 26), processor 52, and/or radio interface 46. Wireless device 22 is configured to receive (Block S106), from the network node 16, an LTM measurement configuration including a configuration of a measurement and a first indication of at least one LTM candidate configuration. Wireless device 22 is configured to perform (Block S108) LTM candidate cell 18 measurements according to the received LTM measurement configuration. Wireless device 22 is configured to transmit (Block S110), to the network node 16, an LTM measurement report including at least one LTM measurement and a second indication of at least one associated LTM candidate configuration.

In some embodiments, the LTM candidate configuration includes at least one of an LTM candidate configuration index, and an LTM measurement index. In some embodiments, the LTM measurement report corresponds to a Medium Access Control (MAC) Control Element (CE) transmitted to the network node 16.

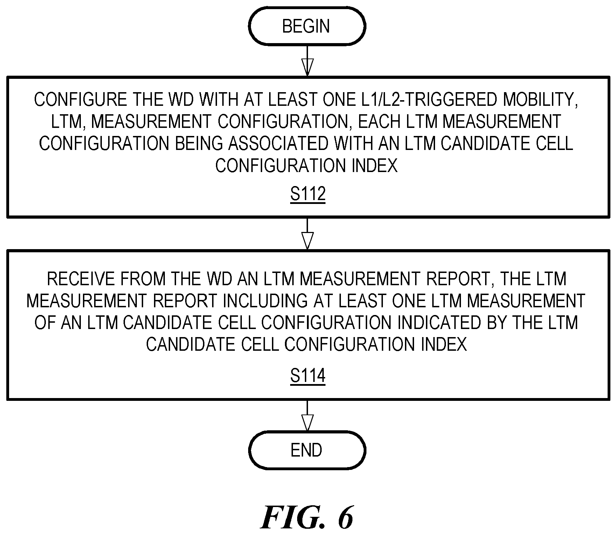

FIG. 6 is a flowchart of an example process in a network node 16 for supporting configurations for LTM reporting. One or more blocks described herein may be performed by one or more elements of network node 16 such as by one or more of processing circuitry 36 (including the LTM configuration unit 24), processor 38, and/or radio interface 30. Network node 16 is configured to configure (Block S112) the WD with at least one L1/L2-triggered mobility, LTM, measurement configuration, each LTM measurement configuration being associated with an LTM candidate cell configuration index. The method also includes receiving (Block S114) from the WD 22 an LTM measurement report, the LTM measurement report including at least one LTM measurement of an LTM candidate cell configuration indicated by the LTM candidate cell configuration index.

According to this aspect, in some embodiments, each LTM measurement configuration indicates at least one primary LTM candidate measurement, at least one LTM serving cell measurement and a maximum number of secondary LTM candidate measurements. In some embodiments, each of the secondary LTM candidate measurements are differentially encoded relative to one of the at least one primary LTM candidate measurement. In some embodiments, the method includes preconfiguring the WD 22 with a set of LTM candidate cell configurations by radio resource control, RRC, signaling and the second indication indicates a selected LTM candidate cell configuration of the set. In some embodiments, the LTM measurement report includes at least one LTM serving cell measurement. In some embodiments, the LTM measurement report includes a beam index and a corresponding LTM measurement. In some embodiments, the method also includes configuring the WD 22 with an LTM reporting configuration, the LTM reporting configuration including at least one primary LTM candidate cell configuration. In some embodiments, the LTM reporting configuration is configured to include an indication of a performance metric to be measured, the performance metric including at least one of a reference signal received power, RSRP, reference signal received quality, RSRQ, signal to interference plus noise ratio, SINR and channel quality indicator. In some embodiments, the LTM reporting configuration is configured to include an absolute radio frequency channel number, ARFCN, to be applied to at least one of the at least one primary LTM candidate cell configuration and a secondary LTM candidate cell configuration. In some embodiments, the LTM reporting configuration is configured to includes at least one secondary LTM candidate cell configuration, the secondary LTM candidate cell configuration including at least one reference signal identity. In some embodiments, at least one of the at least one reference signal identity is associated with one of an absolute radio frequency channel number, ARFCN, and a physical cell identity, PCI. In some embodiments, at least one of the at least one reference signal identity is one of a synchronization signal block, SSB, index and a channel state information reference signal, CSI-RS, resource identification.

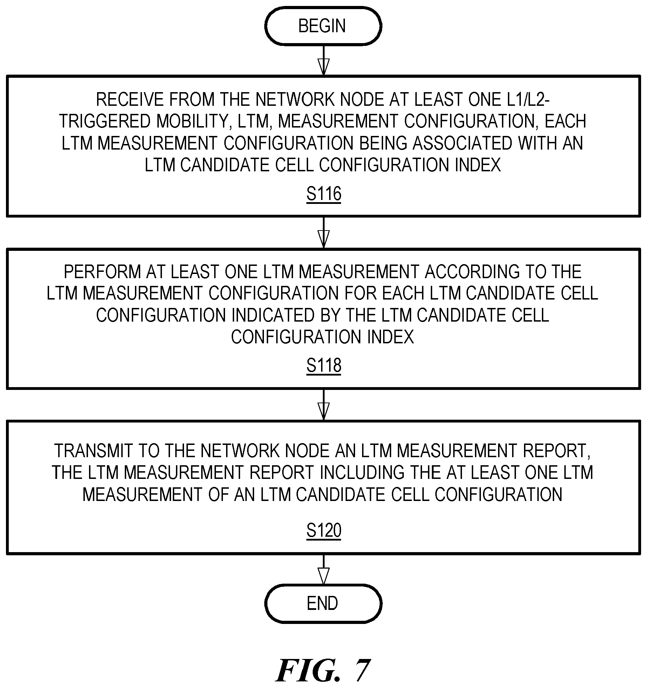

FIG. 7 is a flowchart of an example process in a wireless device 22 according to some embodiments of the present disclosure. One or more blocks described herein may be performed by one or more elements of wireless device 22 such as by one or more of processing circuitry 50 (including the LTM reporting unit 26), processor 52, and/or radio interface 46. Wireless device 22 is configured to receive (Block S116) from the network node 16 a first indication of a L1/L2-triggered mobility, LTM, measurement configuration, each LTM measurement configuration being associated with an LTM candidate cell configuration index. The method also includes performing (Block S118) at least one LTM measurement according to the LTM measurement configuration for each LTM candidate cell configuration indicated by the LTM candidate cell configuration index. The method further includes transmitting (Block S120) to the network node 16 an LTM measurement report, the LTM measurement report including the at least one LTM measurement of an LTM candidate cell configuration.

According to this aspect, in some embodiments, the LTM candidate cell configuration identifies one of a plurality of LTM candidate cell configurations from a set of LTM candidate cell configurations that are preconfigured by radio resource control, RRC, signaling. In some embodiments, each LTM measurement configuration indicates at least one primary LTM candidate measurement, at least one LTM serving cell measurement and a maximum number of secondary LTM candidate measurements. In some embodiments, each of the secondary LTM candidate measurements are differentially encoded relative to one of the at least one primary LTM candidate measurement. In some embodiments, the at least one LTM measurement includes a first measurement of a cell configured as a special cell, SpCell, in the LTM candidate cell configuration. In some embodiments, the at least one LTM measurement includes a second measurement of a secondary cell, Scell, in the LTM candidate cell configuration. In some embodiments, the LTM measurement report includes a third measurement of an synchronization signal block, SSB, configured as a quasi-colocation, QCL, source of an active transmission configuration indicator, TCI, state of the WD 22. In some embodiments, the SSB measurement is included in the LTM measurement report when the SSB is associated with a physical cell identity, PCI, of a current special cell, SpCell, of the WD 22. In some embodiments, the LTM measurement report includes a fourth measurement of a channel state information reference signal, CSI-RS, configured as a quasi-location, QCL, source. In some embodiments, the CSI-RS measurement is included in the LTM measurement report when the CSI-RS is associated with a physical cell identity, PCI, of a current special cell, SpCell, of the WD 22. In some embodiments, the LTM measurement report includes at least one LTM serving cell measurement. In some embodiments, the LTM measurement report includes a beam index and a corresponding LTM measurement. In some embodiments, the at least one LTM measurement includes at least one of first number of primary LTM measurements, a second number of LTM serving cell measurement and a maximum number of secondary LTM measurements. In some embodiments, the LTM measurement report includes an LTM measurement index associated with a plurality of LTM candidate cells.

Having described the general process flow of arrangements of the disclosure and having provided examples of hardware and software arrangements for implementing the processes and functions of the disclosure, the sections below provide details and examples of arrangements for supporting configurations for LTM reporting.

One or more network node 16 functions described below maybe performed by one or more of processing circuitry 36, processor 38, LTM configuration unit 24, etc. One or more wireless device 22 functions described below may be performed by one or more of processing circuitry 50, processor 52, LTM reporting unit 26.

In some embodiments, the LTM measurement report contains at least one primary LTM candidate measurement, where the primary LTM candidate measurement includes at least an LTM candidate configuration index, and a first measurement value. The content of the primary LTM candidate measurement is depicted in Table 1:

**Table 1. Content of example primary LTM candidate measurement.**

| |
|---|
| LTM candidate configuration index |
| Measurement value |
| Beam index (optional) |
| Measurement value, differentially encoded + beam index (optional) |
| Number of LTM serving cell measurements (optional) |
| Number of secondary LTM candidate measurements (optional) |

The LTM configuration index may correspond to an identifier associated to an LTM candidate configuration with which the WD 22 is configured upon reception of an RRC Reconfiguration, e.g., LTM candidate cell 18 (e.g., "cell A"), LTM candidate configuration index=1; LTM candidate cell 18 (e.g., "cell B"), LTM candidate configuration index=2. An RRC Reconfiguration may be received from any network node 16, and/or may be stored, preconfigured, etc., in the WD 22. One advantage of including the configuration index is that index values may be encoded with fewer bits than the actual cell identifier of an LTM candidate cell 18, as the number of LTM candidate cells 18 may typically be lower than the number of cells encoded by a Physical Cell identity (PCI).

In some embodiments,, the LTM measurement report corresponds to a MAC Control Element transmitted by the WD 22 to the network and the information to be included correspond to fields in that MAC CE, added based on one of more rules, e.g., upon the fulfillment of an event configured by the network node 16, periodically, triggered by a request from the network node 16 (e.g., a MAC CE or downlink control information (DCI) received by the WD 22), etc.

In some embodiments, the WD 22 includes in the LTM measurement report one or more measurements of the cell configured as SpCell 18 in the LTM candidate cell configuration.

In some embodiments,, the WD 22 includes in the LTM measurement report one or more measurements of one or more SCell(s) configured in the LTM candidate cell configuration e.g., Scells configured in the CellGroupConfig for the LTM candidate cell configuration.

In some embodiments, the WD 22 includes in the LTM measurement report a measurement of the SSB (e.g., L1 RSRP) associated to the SSB configured as quasicollocation (QCL) source (e.g., type D) of an active transmission configuration indicator (TCI) state the WD 22 has.

In some embodiments, the WD 22 includes in the LTM measurement report a measurement of the SSB (e.g., L1 RSRP) associated to the SSB configured as QCL source (e.g., type D) of an active TCI state of the WD 22, when that is associated with the PCI of the WD 22's current SpCell 18. In this case, in some embodiments, the WD 22 includes an identifier of that SSB. In some embodiments, the WD 22 includes that measurement in a particular position of the report (e.g., in the MAC CE, or in a PUCCH/ PUSCH report) so network node 16 receiving the report knows that a value in that position corresponds to the value of the SSB which is the QCL source of the currently activated TCI state.

In some embodiments, the WD 22 includes in the LTM measurement report a measurement of the CSI-RS (e.g., L1 RSRP) associated to the CSI-RS configured as QCL source (e.g., type D) of an active TCI state the WD 22 has, when that is associated with the PCI of the WD 22's current SpCell 18.

In some embodiments, the WD 22 includes in the LTM measurement report a measurement of the CSI-RS (e.g., L1 RSRP) associated to the CSI-RS configured as QCL source (e.g., type D) of an active TCI state the WD 22 has, when that is associated with the PCI of the WD 22's current SpCell 18.

In some embodiments, the WD 22 includes in the LTM measurement report a measurement of the SSB or CSI-RS (e.g., L1 RSRP) associated to the SSB or CSI-RS configured as QCL source (e.g., type D) of an active TCI state the WD 22 has, as an RSRP value configured with a finite number of bits ('N') and one or more further SSB or CSI-RS measurements using a lower number of bits (differential RSRP).

In some embodiments, the LTM measurement report additionally contains at least one secondary LTM candidate measurement, where the secondary LTM candidate measurement includes at least an LTM candidate configuration index, and a measurement value, which may be differentially encoded relative to the first measurement value of one of the primary LTM candidate measurements. In some embodiments, the measurement value of the secondary LTM candidate measurement is differentially encoded relative to the first primary LTM candidate measurement. An example content of the secondary LTM candidate measurement is depicted in Table 2:

**Table 2. Secondary LTM candidate measurement content example.**

| |
|---|
| LTM candidate configuration index |
| Measurement value, differentially encoded |
| Beam index (optional) |
| Measurement value, differentially encoded + beam index (optional) |

In some embodiments, the LTM measurement report additionally contains one or more LTM serving cell measurements, where the LTM serving cell measurement includes at least a measurement value. An example of content of the LTM serving cell 18 measurement is depicted in Table 3:

**Table 3. Example content of the LTM serving cell measurement.**

| |
|---|
| Measurement value |
| Beam index (optional) |
| Measurement value, differentially encoded + beam index (optional) |

For example, when the WD 22 is configured with an LTM candidate cell 18 (e.g., Cell A) (and associated SCells 18, e.g., SCell A1, A2, ..., An) and an LTM candidate cell 18 (e.g., Cell B) (and associated SCells 18, e.g., SCell B1, B2, ..., Bm), it may be insufficient to include (only) the LTM configuration index, as that may lead to ambiguities as to whether that is for the PCell 18 candidate or one of the associated SCells 18.

In some embodiments, the primary LTM candidate measurement additionally includes a first beam index. In some embodiments, the primary LTM candidate measurement includes multiple pairs of a beam index and a measurement value.

In any of the above embodiments, the measurement value(s) may be an RSRP value, a L1-RSRP value, an SINR value, and/or a L1-SINR value.

As described herein, the LTM measurement report may contain at least one primary LTM candidate measurement, and optionally one or more secondary LTM measurements, and optionally one or more LTM serving cell 18 measurement. In some embodiments, the number of primary LTM candidate measurements (N1), the number of LTM serving cell measurements (N2), and the number of secondary LTM candidate measurements (N3) may be configured by the network node 16. Based on this configuration, the WD 22 may include N1 primary LTM candidate measurements, N2 LTM serving cell measurements and/or N3 secondary LTM candidate measurements in an LTM measurement report.

In some embodiments, the number of primary LTM candidate measurements (N1), the number of LTM serving cell measurements (N2) and the maximum number of secondary LTM candidate measurements (N3max) may be configured by the network node 16. Based on the configuration, the WD 22 includes N1 primary LTM candidate measurements, N2 LTM serving cell 18 measurements and N3≤N3max secondary LTM candidate measurements in an LTM measurement report. In this case, N3 (the number of included secondary LTM candidate measurements) is included in the report. In some embodiments, the N1 primary LTM candidate measurements, the N2 LTM serving cell 18 measurements, and the value of N3 constitutes part 1 of the LTM measurement report, and the N3 secondary LTM candidate measurements constitutes part 2 of the LTM measurement report. In some embodiments, the number of secondary LTM candidate measurements (N3) is included in at least one of the primary LTM candidate measurements, as depicted in Table 1.

In some embodiments, even if the network node 16 configures the WD 22 with the number of primary LTM candidate measurements (N1), the number of LTM serving cell 18 measurements (N2) and the maximum number of secondary LTM candidate measurements (N3max), the WD 22 may include in the LTM measurement report no primary LTM candidate measurement (N1=0), and a number of secondary LTM candidate measurement can be 0 or lower than N3max. This may apply, for example, in a case in which the network node 16 configures the WD 22 to perform measurements on a LTM candidate cell, but the WD 22 is not able either to detect or to perform measurement on that LTM candidate cell 18. In such a case, the WD 22 may still include one or more primary LTM candidate measurements, or one or more secondary LTM serving cell 18 measurements, but in this case either the measurement value is omitted, or it included with a value equal to "null", "NaN", "not detected" or any other value that indicate that no measurements are available on that LTM candidate cell.

In some embodiments, instead of (or in addition to) an LTM candidate configuration index, the LTM measurement report may contain an LTM measurement index. In these embodiments, the network node 16 may configure the WD 22 with LTM measurement index. In these embodiments, the network node 16 may be configured such that each LTM candidate cell configuration may be associated with an LTM measurement index during the configuration of LTM. An advantage of such embodiments is that a given LTM measurement may be associated with multiple LTM candidate cells 18.

In some embodiments, when the network node 16 receives the LTM measurement report, the LTM measurement index included in the report may be used to identify all the LTM candidate cell 18 configurations that are associated with the report. Another advantage with some embodiments is that an LTM measurement may be configured without necessarily being associated with an LTM candidate cell 18.

In some embodiments, the network node 16 provides the WD 22 with LTM measurement configuration(s), where each LTM measurement configuration contains a configuration of a measurement associated with an LTM candidate configuration index.

In some embodiments, the network node 16 provides the WD 22 with LTM measurement configuration(s), where each LTM measurement configuration may contain a configuration of a measurement associated with an LTM measurement index.

In some embodiments, in addition to an LTM candidate configuration index, the LTM measurement report may contain an LTM measurement index. This may be used where the network node 16 may configure at the WD 22 multiple LTM candidate cell 18 configuration(s) (index) to the same LTM candidate cell 18.

In some embodiments, the resource configuration for LTM candidate(s), received by the WD 22, is associated to a LTM reporting configuration (e.g., an instance of the IE LTM-ReportConfig).

In some embodiments, the LTM reporting configuration may include the configuration of at least one primary candidate cell 18. The reporting configuration may also optionally include configuration of one or more serving cells 18, and one or more secondary candidate cells 18.

In some embodiments, the LTM reporting configuration may include information on which quantity should be reported, e.g., RSRP, signal to interference plus noise ratio (SINR), reference signal received quality (RSRQ) or CQI. The report quantity may apply to the serving cell 18 configurations, the primary candidate cell 18 configurations or the secondary candidate configurations.

In some embodiments, the LTM reporting configuration includes an ARFCN, which may apply to the primary candidate cell 18 configurations or the secondary candidate configurations.

In some embodiments, the serving cell 18 configuration in the LTM reporting configuration may include one serving cell 18 index, or one physical cell 18 identity. Additionally, the serving cell 18 configuration in the LTM reporting configuration may optionally contain one or more reference signal identities, where a reference signal identity is associated with the serving cell 18 index, or the physical cell 18 identity. The reference signal identity may be an SSB index or a CSI-RS resource Id. Additionally, the serving cell 18 configuration in the LTM reporting configuration may optionally contain information on how many reference signal identities should be included in the report. Additionally, the LTM report configuration may include information on which quantity should be reported, e.g., RSRP, SINR, RSRQ or CQI.

In some embodiments, the primary candidate cell 18 configuration in the LTM reporting configuration may include a candidate cell 18 measurement identifier, an ARFCN or a physical cell 18 identity. In some embodiments, the candidate cell 18 measurement identifier is the same as the LTM candidate configuration index. Additionally, the primary candidate cell 18 configuration in the LTM reporting configuration may optionally contain one or more reference signal identities, where a reference signal identity is associated with the ARFCN, or the physical cell 18 identity. The reference signal identity could be an SSB index or a CSI-RS resource Id. Additionally, the primary candidate cell 18 configuration in the LTM reporting configuration may optionally contain information on how many reference signal identities should be included in the report. Additionally, the LTM reporting configuration may include information on which quantity should be reported, e.g., RSRP, SINR, RSRQ or CQI

In some embodiments, the secondary candidate cell 18 configuration in the LTM reporting configuration may include a candidate cell 18 measurement identifier, an ARFCN or a physical cell 18 identity. In some embodiments, the candidate cell 18 measurement identifier is the same as the LTM candidate configuration index. Additionally, the secondary candidate cell 18 configuration in the LTM reporting configuration may optionally contain one or more reference signal identities, where a reference signal identity is associated with the ARFCN, or the physical cell 18 identity. The reference signal identity may be an SSB index or a CSI-RS resource Id. Additionally, the secondary candidate cell configuration in the LTM reporting configuration may optionally contain information on how many reference signal identities may be included in the report. Additionally, the LTM reporting configuration may include information on which quantity may be reported, e.g., RSRP, SINR, RSRQ or CQI.

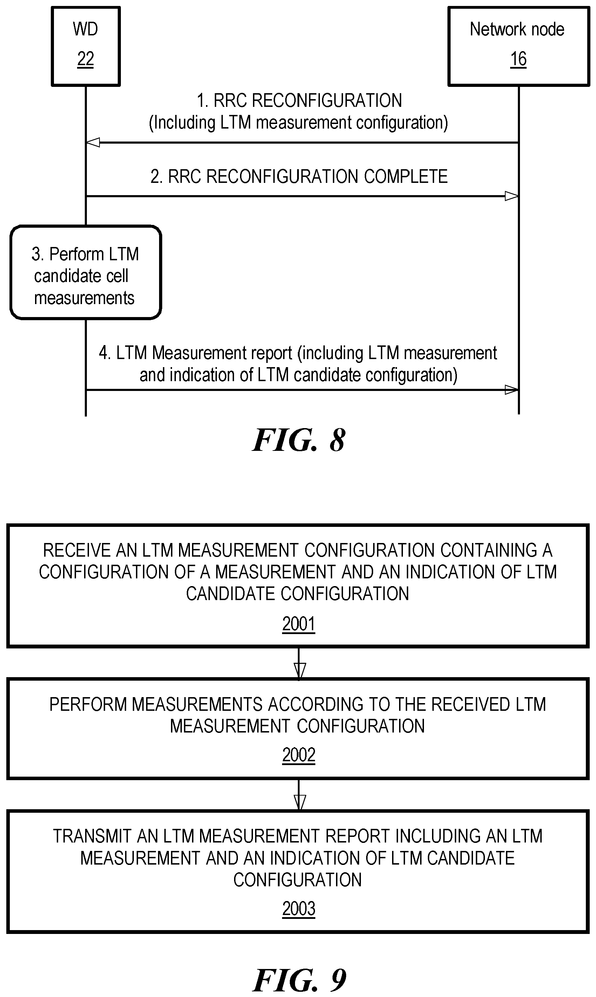

FIG. 8 is a signaling diagram illustrating an example message sequence of some embodiments of the present disclosure, including the following steps:
Step 1. The network node 16 (e.g., gNB) provides an LTM measurement configuration to the WD 22 in an RRCReconfiguration message, containing a configuration of a measurement and an indication of LTM candidate configuration, such as an LTM candidate configuration index or an LTM measurement index.
Step 2. The WD 22 returns an RRC Reconfiguration Complete message to the network node 16 (e.g., gNB).
Step 3. The WD 22 performs LTM candidate cell measurements according to the received LTM measurement configuration.
Step 4. The WD 22 transmits an LTM measurement report to the network node 16 (e.g., gNB), including an LTM measurement and an indication of LTM candidate configuration, such as an LTM candidate configuration index or an LTM measurement index. Upon reception of the LTM measurement report, the network node 16 (e.g., gNB) may use the indication of LTM candidate configuration to select an LTM candidate cell configuration to use for an LTM cell switch procedure triggered by the received measurement report.

FIG. 9 is a flowchart describing an example embodiment of the present disclosure as performed by the WD 22, including:
Step 2001. The WD 22 receives, from a network node 16, an LTM measurement configuration containing a configuration of a measurement and an indication of LTM candidate configuration, such as an LTM candidate configuration index or an LTM measurement index.
Step 2002. The WD 22 performs measurements according to the received LTM measurement configuration.
Step 2003. The WD 22 transmits an LTM measurement report to a network node, including an LTM measurement and an indication of LTM candidate configuration, such as an LTM candidate configuration index or an LTM measurement index.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Abbreviations that may be used in the preceding description include:
- ACK: Acknowledgement
- AGC: Automatic Gain Control
- ARFCN: Absolute radio-frequency channel number
- ARQ: Automatic Repeat Request
- BWP: Bandwidth Part
- C-RNTI: Cell Radio Network Temporary Identifier
- CA: Carrier Aggregation
- CE: Control Element
- CP: Cyclic Prefix
- CQI: Channel Quality Indicator
- C-RNTI: Cell Radio Network Temporary Identifier
- CSI: Channel State Information
- CSI-RS: Channel State Information Reference Signal
- CU: Central Unit
- DC: Dual Connectivity
- DCI: Downlink Control Information
- DL: Downlink
- DU: Distributed Unit
- F1: Interface between Central Unit and Distributed Unit
- FDD: Frequency Division Duplex
- gNB: NR base station
- HARQ: Hybrid ARQ
- IE: Information Element
- IP: Internet Protocol
- LTE: Long Term Evolution
- LTM: L1/L2-Triggered Mobility
- MCG: Master Cell Group
- MAC: Medium Access Control
- MAC CE: MAC Control Element
- MCS: Modulation and Coding Scheme
- MN: Master Node
- MR-DC: Multi-Radio Dual Connectivity
- NACK: Negative Acknowledgement
- NR: New Radio
- PCell: Primary Cell
- PCI: Physical Cell Identity
- PDCCH: Physical Downlink Control Channel
- PHR: Power headroom report
- PUCCH: Physical Uplink Control Channel
- PUSCH: Physical Uplink Shared Channel
- RACH: Random Access Channel
- RAT: Radio Access Technology
- RLC: Radio Link Control
- RRC: Radio Resource Control
- RSRP: Reference Signal Received Power
- RSRQ: Reference Signal Received Quality
- SCell: Secondary Cell
- SCG: Secondary Cell Group
- SCS: Subcarrier Spacing
- SINR: Signal to Interference plus Noise Ratio
- SR: Scheduling Request
- SSB: Synchronization Signal Block
- SpCell: Special Cell, the primary cell of a master or secondary cell group
- TCI: Transmission Configuration Indication
- TDD: Time Division Duplex
- TPC: Transmission Power Control
- UCI: Uplink Control Information
- UDP: User Datagram Protocol
- UE: User Equipment
- UL: Uplink
- UL-SCH: Uplink Shared Channel
- UP: User Plane
- URLLC: Ultra Reliable Low Latency Communication

## Claims

1. A method performed by a wireless device, WD (22), configured to communicate with a network node (16), the method comprising:
receiving (S116) from the network node (16) at least one L1/L2-triggered mobility, LTM, measurement configuration, each LTM measurement configuration being associated with an LTM candidate cell configuration index;
performing (S118) at least one LTM measurement according to the LTM measurement configuration for each LTM candidate cell configuration indicated by the LTM candidate cell configuration index; and
transmitting (S120) to the network node (16) an LTM measurement report, the LTM measurement report including the at least one LTM measurement of an LTM candidate cell configuration.

2. The method of Claim 1, wherein the LTM candidate cell configuration identifies one of a plurality of LTM candidate cell configurations from a set of LTM candidate cell configurations that are preconfigured by radio resource control, RRC, signaling.

3. The method of Claim 1, wherein each LTM measurement configuration indicates at least one primary LTM candidate measurement, at least one LTM serving cell measurement and a maximum number of secondary LTM candidate measurements.

4. The method of Claim 3, wherein each of the secondary LTM candidate measurements are differentially encoded relative to one of the at least one primary LTM candidate measurement.

5. The method of any of Claims 1-4, wherein the at least one LTM measurement includes a first measurement of a cell configured as a special cell, SpCell, in the LTM candidate cell configuration, and/or
wherein the at least one LTM measurement includes a second measurement of a secondary cell, Scell, in the LTM candidate cell configuration.

6. The method of any of Claims 1-5, wherein the LTM measurement report includes a third measurement of an synchronization signal block, SSB, configured as a quasi-colocation, QCL, source of an active transmission configuration indicator, TCI, state of the WD (22).

7. The method of Claim 6, wherein the SSB measurement is included in the LTM measurement report when the SSB is associated with a physical cell identity, PCI, of a current special cell, SpCell, of the WD (22).

8. The method of any of Claims 1-7, wherein the LTM measurement report includes a fourth measurement of a channel state information reference signal, CSI-RS, configured as a quasi-location, QCL, source.

9. The method of Claim 8, wherein the CSI-RS measurement is included in the LTM measurement report when the CSI-RS is associated with a physical cell identity, PCI, of a current special cell, SpCell, of the WD (22).

10. The method of any of Claims 1-9, wherein the LTM measurement report includes at least one LTM serving cell measurement, and/or
wherein the LTM measurement report includes a beam index and a corresponding LTM measurement.

11. The method of any of Claims 1-10, wherein the LTM measurement report corresponds to a MAC control element, transmitted by the WD (22) to the network.

12. The method of any of Claims 1-11, wherein the WD (22) is configured by the network node (16) with an LTM reporting configuration.

13. The method of Claim 12, wherein the method comprises: receiving a resource configuration for one or more LTM candidate cells, associated to the LTM reporting configuration.

14. The method of Claim 12, wherein the LTM reporting configuration comprises a configuration of a serving cell, and/or
wherein the LTM reporting configuration comprises information on which quantity should be reported.

15. A wireless device, WD (22), configured to communicate with a network node (16), the WD (22) configured to:
receive from the network node (16) at least one L1/L2-triggered mobility, LTM, measurement configuration, each LTM measurement configuration being associated with an LTM candidate cell configuration index;
perform at least one LTM measurement according to the LTM measurement configuration for each LTM candidate cell configuration indicated by the LTM candidate cell configuration index; and
transmit to the network node (16) an LTM measurement report, the LTM measurement report including the at least one LTM measurement of an LTM candidate cell configuration.

16. The wireless device, WD (22), of claim 15, further configured to perform the method of any one of claims 2 to 14

17. A method performed by a network node (16) configured to communicate with a wireless device, WD (22), the method comprising:
configuring (S112) the WD (22) with at least one L1/L2-triggered mobility, LTM, measurement configuration, each LTM measurement configuration being associated with an LTM candidate cell configuration index; and
receiving (S114) from the WD (22) an LTM measurement report, the LTM measurement report including at least one LTM measurement of an LTM candidate cell configuration indicated by the LTM candidate cell configuration index.

18. The method of Claim 17, wherein each LTM measurement configuration indicates at least one primary LTM candidate measurement, at least one LTM serving cell measurement and a maximum number of secondary LTM candidate measurements.

19. The method of Claim 18, wherein each of the secondary LTM candidate measurements are differentially encoded relative to one of the at least one primary LTM candidate measurement.

20. The method of any of Claims 17-19, wherein the LTM measurement report includes at least one LTM serving cell measurement, and/or wherein the LTM measurement report includes a beam index and a corresponding LTM measurement.

21. A network node (16) configured to communicate with a wireless device, WD (22), the network node (16) configured to:
configure the WD (22) with at least one L1/L2-triggered mobility, LTM, measurement configuration, each LTM measurement configuration being associated with an LTM candidate cell configuration index; and
receive from the WD (22) an LTM measurement report, the LTM measurement report including at least one LTM measurement of an LTM candidate cell configuration indicated by the LTM candidate cell configuration index.

22. The network node (16) of claim 21, further configured to perform the method of any one of claims 18 - 20.

## Patentansprüche

1. Verfahren, das von einer drahtlosen Vorrichtung, WD, (22) durchgeführt wird, die zum Kommunizieren mit einem Netzwerkknoten (16) konfiguriert ist, wobei das Verfahren Folgendes umfasst:
Empfangen (S116) mindestens einer L1/L2-ausgelösten Mobilitätsmesskonfiguration, LTM-Messkonfiguration, von dem Netzwerkknoten (16), wobei jede LTM-Messkonfiguration mit einem LTM-Kandidatenzellenkonfigurationsindex assoziiert ist;
Durchführen (S118) mindestens einer LTM-Messung gemäß der LTM-Messkonfiguration für jede durch den LTM-Kandidatenzellenkonfigurationsindex angegebene LTM-Kandidatenzellenkonfiguration; und
Senden (S120) eines LTM-Messberichts an den Netzwerkknoten (16), wobei der LTM-Messbericht die mindestens eine LTM-Messung einer LTM-Kandidatenzellenkonfiguration umfasst.

2. Verfahren nach Anspruch 1, wobei die LTM-Kandidatenzellenkonfiguration eine von einer Mehrzahl von LTM-Kandidatenzellenkonfigurationen aus einem Satz von LTM-Kandidatenzellenkonfigurationen identifiziert, die durch Funksteuerungssteuerungssignalisierung, RRC-Signalisierung, vorkonfiguriert sind.

3. Verfahren nach Anspruch 1, wobei jede LTM-Messkonfiguration mindestens eine primäre LTM-Kandidatenmessung, mindestens eine LTM-Serving-Cell-Messung und eine maximale Anzahl von sekundären LTM-Kandidatenmessungen angibt.

4. Verfahren nach Anspruch 3, wobei jede der sekundären LTM-Kandidatenmessungen relativ zu einer der mindestens einen primären LTM-Kandidatenmessung differenziell codiert wird.

5. Verfahren nach einem der Ansprüche 1-4, wobei die mindestens eine LTM-Messung eine erste Messung einer Zelle umfasst, die in der LTM-Kandidatenzellenkonfiguration als Spezialzelle, SpCell, konfiguriert ist, und/oder
wobei die mindestens eine LTM-Messung eine zweite Messung einer Sekundärzelle, Scell, in der LTM-Kandidatenzellenkonfiguration umfasst.

6. Verfahren nach einem der Ansprüche 1-5, wobei der LTM-Messbericht eine dritte Messung eines Synchronisationssignalblocks, SSB, umfasst, der als Quasi-Colocation-Quelle, QCL-Quelle, eines aktiven Übertragungskonfigurationsindikatorzustands, TCI-Zustands, der WD (22) konfiguriert ist.

7. Verfahren nach Anspruch 6, wobei die SSB-Messung in den LTM-Messbericht aufgenommen wird, wenn der SSB mit einer physikalischen Zellenidentität, PCI, einer aktuellen Spezialzelle, SpCell, der WD (22) assoziiert ist.

8. Verfahren nach einem der Ansprüche 1-7, der LTM-Messbericht eine vierte Messung eines Kanalzustandsinformations-Referenzsignals, CSI-RS, umfasst, das als Quasi-Colocation-Quelle, QCL-Quelle, konfiguriert ist.

9. Verfahren nach Anspruch 8, wobei die CSI-RS-Messung in den LTM-Messbericht aufgenommen wird, wenn das CSI-RS mit einer physikalischen Zellenidentität, PCI, einer aktuellen Spezialzelle, SpCell, der WD (22) assoziiert ist.

10. Verfahren nach einem der Ansprüche 1-9, wobei der LTM-Messbericht mindestens eine LTM-Serving-Cell-Messung umfasst, und/oder
wobei der LTM-Messbericht einen Strahlindex und eine entsprechende LTM-Messung umfasst.

11. Verfahren nach einem der Ansprüche 1-10 wobei der LTM-Messbericht einem MAC-Steuerelement entspricht, das von der WD (22) an das Netzwerk gesendet wird.

12. Verfahren nach einem der Ansprüche 1-11 wobei die WD (22) von dem Netzwerkknoten (16) mit einer LTM-Berichterstattungskonfiguration konfiguriert wird.

13. Verfahren nach Anspruch 12, wobei das Verfahren Folgendes umfasst: Empfangen einer Ressourcenkonfiguration für eine oder mehrere LTM-Kandidatenzellen, die mit der LTM-Berichterstattungskonfiguration assoziiert sind.

14. Verfahren nach Anspruch 12, wobei die LTM-Berichterstattungskonfiguration eine Konfiguration einer Serving Cell umfasst, und/oder
wobei die LTM-Berichterstattungskonfiguration Informationen umfasst, über welche Größe Bericht erstattet werden soll.

15. Drahtlose Vorrichtung, WD, (22), die zum Kommunizieren mit einem Netzwerkknoten (16) konfiguriert ist, wobei die WD (22) zu Folgendem konfiguriert ist:
Empfangen mindestens einer L1/L2-ausgelösten Mobilitätsmesskonfiguration, LTM-Messkonfiguration, von dem Netzwerkknoten (16), wobei jede LTM-Messkonfiguration mit einem LTM-Kandidatenzellenkonfigurationsindex assoziiert ist;
Durchführen mindestens einer LTM-Messung gemäß der LTM-Messkonfiguration für jede durch den LTM-Kandidatenzellenkonfigurationsindex angegebene LTM-Kandidatenzellenkonfiguration; und
Senden eines LTM-Messberichts an den Netzwerkknoten (16), wobei der LTM-Messbericht die mindestens eine LTM-Messung einer LTM-Kandidatenzellenkonfiguration umfasst.

16. Drahtlose Vorrichtung, WD, (22) nach Anspruch 15, ferner konfiguriert zum Durchführen des Verfahrens nach einem der Ansprüche 2 bis 14.

17. Verfahren, das von einem Netzwerkknoten (16) durchgeführt wird, der zum Kommunizieren mit einer drahtlosen Vorrichtung, WD, (22) konfiguriert ist, wobei das Verfahren Folgendes umfasst:
Konfigurieren (S112) der WD (22) mit mindestens einer L1/L2-ausgelösten Mobilitätsmesskonfiguration, LTM-Messkonfiguration, wobei jede LTM-Messkonfiguration mit einem LTM-Kandidatenzellenkonfigurationsindex assoziiert ist; und
Empfangen (S114) eines LTM-Messberichts von der WD (22), wobei der LTM-Messbericht mindestens eine LTM-Messung einer durch den LTM-Kandidatenzellenkonfigurationsindex angegebenen LTM-Kandidatenzellenkonfiguration umfasst.

18. Verfahren nach Anspruch 17, wobei jede LTM-Messkonfiguration mindestens eine primäre LTM-Kandidatenmessung, mindestens eine LTM-Serving-Cell-Messung und eine maximale Anzahl von sekundären LTM-Kandidatenmessungen angibt.

19. Verfahren nach Anspruch 18, wobei jede der sekundären LTM-Kandidatenmessungen relativ zu einer der mindestens einen primären LTM-Kandidatenmessung differenziell codiert wird.

20. Verfahren nach einem der Ansprüche 17-19, wobei der LTM-Messbericht mindestens eine LTM-Serving-Cell-Messung umfasst, und/oder wobei der LTM-Messbericht einen Strahlindex und eine entsprechende LTM-Messung umfasst.

21. Netzwerkknoten (16), der zum Kommunizieren mit einer drahtlosen Vorrichtung, WD, (22) konfiguriert ist, wobei der Netzwerkknoten (16) zu Folgendem konfiguriert ist:
Konfigurieren der WD (22) mit mindestens einer L1/L2-ausgelösten Mobilitätsmesskonfiguration, LTM-Messkonfiguration, wobei jede LTM-Messkonfiguration mit einem LTM-Kandidatenzellenkonfigurationsindex assoziiert ist; und
Empfangen eines LTM-Messberichts von der WD (22), wobei der LTM-Messbericht mindestens eine LTM-Messung einer durch den LTM-Kandidatenzellenkonfigurationsindex angegebenen LTM-Kandidatenzellenkonfiguration umfasst.

22. Netzwerkknoten (16) nach Anspruch 21, ferner konfiguriert zum Durchführen des Verfahrens nach einem der Ansprüche 18-20.

## Revendications

1. Procédé réalisé par un dispositif sans fil, WD (22), configuré pour communiquer avec un nœud de réseau (16), le procédé comprenant :
la réception (S116), depuis le nœud de réseau (16), d'au moins une configuration de mesure de mobilité déclenchée par L1/L2, LTM, chaque configuration de mesure LTM étant associée à un indice de configuration de cellule candidate LTM ;
la réalisation (S118) d'au moins une mesure LTM selon la configuration de mesure LTM pour chaque configuration de cellule candidate LTM indiquée par l'indice de configuration de cellule candidate LTM ; et la transmission (S120), au nœud de réseau (16), d'un rapport de mesure LTM, le rapport de mesure LTM incluant l'au moins une mesure LTM d'une configuration de cellule candidate LTM.

2. Procédé selon la revendication 1, dans lequel la configuration de cellule candidate LTM identifie l'une parmi une pluralité de configurations de cellules candidates LTM parmi un ensemble de configurations de cellules candidates LTM qui sont préconfigurées par une signalisation de commande de ressources radio, RRC.

3. Procédé selon la revendication 1, dans lequel chaque configuration de mesure LTM indique au moins une mesure candidate LTM primaire, au moins une mesure de cellule de desserte LTM et un nombre maximal de mesures candidates LTM secondaires.

4. Procédé selon la revendication 3, dans lequel chacune des mesures candidates LTM secondaires est codée différentiellement par rapport à l'une de l'au moins une mesure candidate LTM primaire.

5. Procédé selon l'une quelconque des revendications 1 à 4, dans lequel l'au moins une mesure LTM inclut une première mesure d'une cellule configurée en tant que cellule spéciale, SpCell, dans la configuration de cellule candidate LTM, et/ou
dans lequel l'au moins une mesure LTM inclut une deuxième mesure d'une cellule secondaire, Scell, dans la configuration de cellule candidate LTM.

6. Procédé selon l'une quelconque des revendications 1 à 5, dans lequel le rapport de mesure LTM inclut une troisième mesure d'un bloc de signal de synchronisation, SSB, configuré en tant que source de quasi-colocalisation, QCL, d'un état actif d'indicateur de configuration de transmission, TCI, du WD (22).

7. Procédé selon la revendication 6, dans lequel la mesure SSB est incluse dans le rapport de mesure LTM lorsque le SSB est associé à une identité de cellule physique, PCI, d'une cellule spéciale, SpCell, actuelle du WD (22).

8. Procédé selon l'une quelconque des revendications 1 à 7, dans lequel le rapport de mesure LTM inclut une quatrième mesure d'un signal de référence d'informations d'état de canal, CSI-RS, configuré en tant que source de quasi-colocalisation, QCL.

9. Procédé selon la revendication 8, dans lequel la mesure de CSI-RS est incluse dans le rapport de mesure LTM lorsque le CSI-RS est associé à une identité de cellule physique, PCI, d'une cellule spéciale, SpCell, actuelle du WD (22).

10. Procédé selon l'une quelconque des revendications 1 à 9, dans lequel le rapport de mesure LTM inclut au moins une mesure de cellule de desserte LTM, et/ou dans lequel le rapport de mesure LTM inclut un indice de faisceau et une mesure LTM correspondante.

11. Procédé selon l'une quelconque des revendications 1 à 10, dans lequel le rapport de mesure LTM correspond à un élément de commande MAC transmis par le WD (22) au réseau.

12. Procédé selon l'une quelconque des revendications 1 à 11, dans lequel le WD (22) est configuré par le nœud de réseau (16) avec une configuration de rapport LTM.

13. Procédé selon la revendication 12, dans lequel le procédé comprend : la réception d'une configuration de ressources pour une ou plusieurs cellules candidates LTM, associées à la configuration de rapport LTM.

14. Procédé selon la revendication 12, dans lequel la configuration de rapport LTM comprend une configuration d'une cellule de desserte, et/ou
dans lequel la configuration de rapport LTM comprend des informations relatives à la quantité qui doit être rapportée.

15. Dispositif sans fil, WD (22), configuré pour communiquer avec un nœud de réseau (16), le WD (22) étant configuré pour :
recevoir, depuis le nœud de réseau (16), au moins une configuration de mesure de mobilité déclenchée par L1/L2, LTM, chaque configuration de mesure LTM étant associée à un indice de configuration de cellule candidate LTM ;
réaliser au moins une mesure LTM selon la configuration de mesure LTM pour chaque configuration de cellule candidate LTM indiquée par l'indice de configuration de cellule candidate LTM ; et
transmettre, au nœud de réseau (16), un rapport de mesure LTM, le rapport de mesure LTM incluant l'au moins une mesure LTM d'une configuration de cellule candidate LTM.

16. Dispositif sans fil, WD (22), selon la revendication 15, configuré en outre pour réaliser le procédé selon l'une quelconque des revendications 2 à 14.

17. Procédé réalisé par un nœud de réseau (16) configuré pour communiquer avec un dispositif sans fil, WD (22), le procédé comprenant :
la configuration (S112) du WD (22) avec au moins une configuration de mesure de mobilité déclenchée par L1/L2, LTM, chaque configuration de mesure LTM étant associée à un indice de configuration de cellule candidate LTM ; et
la réception (S114), depuis le WD (22), d'un rapport de mesure LTM, le rapport de mesure LTM incluant au moins une mesure LTM d'une configuration de cellule candidate LTM indiquée par l'indice de configuration de cellule candidate LTM.

18. Procédé selon la revendication 17, dans lequel chaque configuration de mesure LTM indique au moins une mesure candidate LTM primaire, au moins une mesure de cellule de desserte LTM et un nombre maximal de mesures candidates LTM secondaires.

19. Procédé selon la revendication 18, dans lequel chacune des mesures candidates LTM secondaires est codée différentiellement par rapport à l'une de l'au moins une mesure candidate LTM primaire.

20. Procédé selon l'une quelconque des revendications 17 à 19, dans lequel le rapport de mesure LTM inclut au moins une mesure de cellule de desserte LTM, et/ou dans lequel le rapport de mesure LTM inclut un indice de faisceau et une mesure LTM correspondante.

21. Nœud de réseau (16) configuré pour communiquer avec un dispositif sans fil, WD (22), le nœud de réseau (16) étant configuré pour :
configurer le WD (22) avec au moins une configuration de mesure de mobilité déclenchée par L1/L2, LTM, chaque configuration de mesure LTM étant associée à un indice de configuration de cellule candidate LTM ; et
recevoir, depuis le WD (22), un rapport de mesure LTM, le rapport de mesure LTM incluant au moins une mesure LTM d'une configuration de cellule candidate LTM indiquée par l'indice de configuration de cellule candidate LTM.

22. Nœud de réseau (16) selon la revendication 21, configuré en outre pour réaliser le procédé selon l'une quelconque des revendications 18 à 20.
